# DEMANDE DE BREVET EUROPEEN

(11) **EP 4 495 068 A1**
(43) Date de publication de la demande: **22.01.2025**
(21) Numéro de dépôt: 24188179.6
(22) Date de dépôt: 12.07.2024
(51) Int. Cl.: C01B 33/021, C01B 33/023, C01B 33/027, H01M 4/38, B01J 19/12

(54) **PROCÉDÉ DE FORMATION DE SILICIUM À PARTIR DE SILICE ET SILICIUM PASSIVÉ**

(30) Priorité: 19.07.2023 FR 2307723
(71) Demandeur: Ampere SAS, 92100 Boulogne-Billancourt (FR)
(72) Inventeur: BOURRIOUX, Samantha, 78084 Guyancourt (FR); LOMBARD, Tristan, 78084 Guyancourt (FR)
(74) Mandataire: Renault Group

(57) **Abrégé**

Procédé de formation de silicium par réduction de silice et/ou de silicium passivé, le procédé comprenant les étapes suivantes :
- acheminer du silane vers un réacteur (2) placé sous atmosphère inerte ;
- acheminer de la silice et/ou du silicium passivé vers le réacteur (2) pour obtenir un mélange formé par le silane et la silice et/ou le silicium passivé ;
- appliquer un faisceau (6a) de laser à dioxyde de carbone (6) audit mélange pour la formation de silicium et d'eau dans le réacteur (2) ; et
- récupérer le silicium obtenu.

## Description

La présente invention concerne, de manière générale, la formation de silicium et le recyclage de déchets de silice et de silicium passivé issus de divers domaines tels que la micro-électronique, l'énergie photovoltaïque ou encore les batteries.

Plus précisément, l'invention concerne un procédé de formation de silicium à partir de silice et/ou de silicium passivé ainsi qu'un dispositif de formation de silicium à partir de silice et/ou de silicium passivé.

Parmi les nouveaux matériaux d'électrodes de batteries lithium-ion, le silicium, Si, fait partie des candidats prometteurs pour remplacer le graphite, notamment en raison de sa capacité théorique élevée.

Classiquement, de la silice, SiO2, est extraite de carrières de quartz puis réduite par carbo-réduction pour l'obtention de silicium.

La carbo-réduction est réalisée en présence de carbone, à température très élevée, autour de 1700°C, et génère, en sus du silicium, du monoxyde de carbone, CO, ou du dioxyde de carbone, CO₂.

D'autres procédés existants permettent d'obtenir du silicium à partir de silice.

En particulier, un procédé connu repose sur l'utilisation d'un nuage gazeux d'aluminium pour créer une atmosphère réductrice destinée à réduire la silice en silicium.

Cependant, ce procédé dure plusieurs heures et nécessite une préparation chimique pour créer le nuage d'aluminium à partir de chlorure d'aluminium.

Les procédés existants de réduction de la silice sont donc des procédés longs, impliquant l'utilisation de fours à très haute température et/ou la succession de plusieurs étapes de synthèse, et parfois même l'utilisation de produits chimiques dangereux pour l'utilisateur.

De plus, ces procédés nécessitent d'être réalisés sous forme de batch et l'homogénéité des poudres obtenues n'est pas toujours assurée.

L'invention a donc pour but de remédier à ces inconvénients et de proposer un procédé simple et rapide permettant d'obtenir du silicium à partir de silice sans formation de composés polluants, ne nécessitant pas de températures élevées.

Il est donc proposé un procédé de formation de silicium par réduction de silice et/ou de silicium passivé, le procédé de formation comprenant les étapes suivantes :
- acheminer du silane vers un réacteur placé sous atmosphère inerte ;
- acheminer de la silice et/ou du silicium passivé vers le réacteur pour obtenir un mélange formé par le silane et la silice et/ou le silicium passivé ;
- appliquer un faisceau de laser à dioxyde de carbone audit mélange pour la formation de silicium et d'eau dans le réacteur ; et
- récupérer le silicium obtenu.

Le procédé de formation est réalisé en une unique étape et conduit à l'obtention de silicium et de vapeur d'eau. La réaction prend place sous atmosphère inerte et sans autre réactif que le silane, rendant possible la production de poudres de silicium avec des niveaux de pureté élevés.

Le silicium obtenu peut être utilisé dans de nombreux domaines comme la micro-électronique, l'énergie photovoltaïque, ou encore les batteries, telles que les batteries de véhicule automobile électrique ou hybride.

De préférence, la silice et/ou le silicium passivé sont acheminés sous forme d'aérosol.

Avantageusement, le procédé de formation peut comprendre la variation du débit de silice et/ou de silicium passivé acheminé vers le réacteur, notamment en fonction d'au moins un paramètre choisi parmi : le temps de résidence de la silice et/ou du silicium passivé dans le réacteur ou le taux de production de silicium souhaité.

Avantageusement, le procédé de formation peut comprendre la variation du débit de silane acheminé vers le réacteur, notamment en fonction d'au moins un paramètre choisi parmi : le temps de résidence du silane dans le réacteur, la température dans le réacteur.

De préférence, la taille des particules de silice et/ou de silicium passivé est comprise entre 100 nm et 100 µm.

Avantageusement, le procédé de formation peut comprendre un broyage de la silice et/ou du silicium passivé avant d'être acheminés vers le réacteur.

De préférence, l'acheminement du silane et/ou de la silice et/ou du silicium passivé vers le réacteur est effectué à l'aide d'un gaz inerte, de préférence de l'argon.

De préférence, la puissance du laser à dioxyde de carbone est comprise entre 500 et 2500 W.

Avantageusement, le mélange de silane et de silice et/ou silicium passivé peut être acheminé vers le réacteur à l'aide d'une arrivée de mélange de silane et de silice et/ou de silicium passivé, le procédé comprenant la variation du diamètre de l'arrivée de mélange de silane et de silice et/ou de silicium passivé, notamment en fonction d'au moins un paramètre choisi parmi : le taux de production de silicium souhaité, la taille des particules de silice et/ou de silicium passivé, ou la pureté du silicium souhaitée.

Avantageusement, le silice et/ou silicium passivé peut être acheminé vers le réacteur à l'aide d'une arrivée de silice et/ou de silicium passivé, le procédé comprenant la variation du diamètre de l'arrivée de silice et/ou de silicium passivé, notamment en fonction d'au moins un paramètre choisi parmi : le taux de production de silicium souhaité, la taille des particules de silice et/ou de silicium passivé, ou la pureté du silicium souhaitée.

De préférence, le silicium obtenu est collecté par un filtre à l'aide d'une pompe disposé en aval du réacteur.

Avantageusement, la pureté du silicium obtenu peut être modulée, de préférence à partir d'au moins un des paramètres suivants : la température de la flamme de réaction générée lors de l'application du faisceau de laser à dioxyde de carbone sur ledit mélange, le temps de résidence de la silice et/ou du silicium passivé dans le réacteur, ou le ratio silice/silane dans le réacteur.

Avantageusement, la taille des particules de silicium obtenu peut être modulée, de préférence à partir d'au moins un des paramètres suivants : le temps de résidence dans la flamme générée lors de l'application du faisceau de laser à dioxyde de carbone sur ledit mélange, ou la température de ladite flamme.

Dans un mode de réalisation, le procédé de formation peut comprendre la formation d'un revêtement de carbone en surface du silicium obtenu. Les composés de silicium ainsi revêtus de carbone peuvent avantageusement être utilisés dans une batterie, telle qu'une batterie de véhicule automobile.

Dans un mode de réalisation, la silice et/ou le silicium passivé sont issus de déchets de silice et/ou de silicium passivé.

Un tel recyclage permet de limiter l'impact environnemental lié à l'extraction de silice de carrières de quartz en recyclant de la silice et/ou du silicium passivé issus de divers secteurs comme la micro-électronique, l'énergie photovoltaïque, ou encore les batteries, telles que les batteries de véhicule automobile électrique ou hybride.

L'invention concerne aussi une utilisation de silicium susceptible d'être obtenu par un procédé de formation comme précédemment décrit ou par un procédé de recyclage comme précédemment décrit dans une batterie tel qu'une batterie lithium-ion.

Le silicium obtenu peut être utilisé comme matière active pour des cellules lithium-ion, par exemple, dans le cadre de batterie particulièrement performante.

L'invention concerne également un procédé de formation de silicium par réduction de silice et/ou de silicium passivé, comprenant :
- un réacteur sous atmosphère inerte ;
- une arrivée de silane et une arrivée de silice et/ou de silicium passivé configurées pour acheminer le silane et la silice et/ou le silicium passivé vers le réacteur ;
- un laser à dioxyde de carbone configuré pour appliquer un faisceau à un mélange formé par le silane et la silice et/ou le silicium passivé dans le réacteur ; et
- une sortie du silicium obtenu.

De préférence, le dispositif de formation comprend un générateur d'aérosol en amont de l'arrivée de silice et/ou de silicium passivé.

Avantageusement, le dispositif de formation peut comprendre une pompe disposée en aval du réacteur et un filtre apte à collecter le silicium obtenu.

D'autres buts, avantages et caractéristiques ressortiront de la description qui va suivre, donnée à titre purement illustratif et faite en référence au dessin annexé sur lequel :

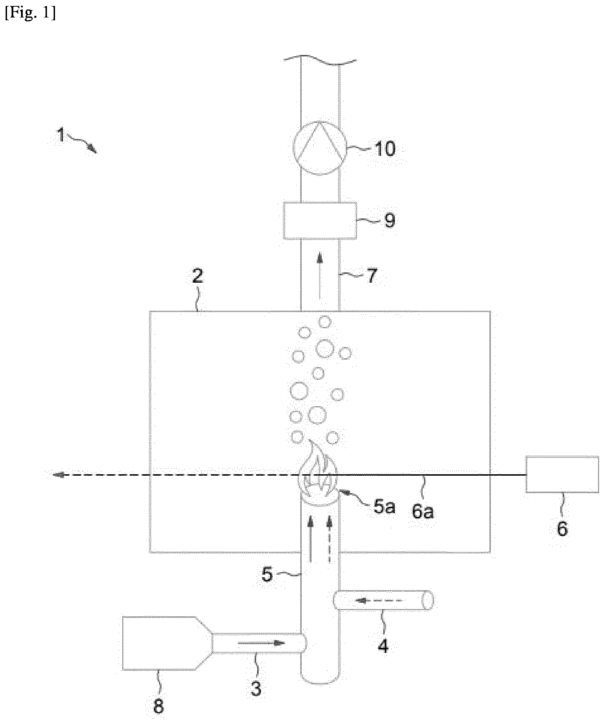

[Fig.1] illustre un dispositif de formation de silicium selon un mode de réalisation de l'invention.

Dans la description de l'invention qui va être faite, l'expression « au moins un » utilisée doit être considérée équivalente à l'expression « un ou plusieurs ».

Par ailleurs, les bornes d'un domaine de valeurs sont comprises dans ce domaine, notamment dans l'expression « compris entre ».

La [Fig.1] illustre un dispositif de formation 1 de silicium par réduction de silice et/ ou de silicium passivé, selon un mode de réalisation de l'invention.

Par silicium passivé, on entend dans la présente invention un composé en silicium comportant une couche d'oxydation, sur tout ou partie de sa surface. En effet, le silicium a pour tendance de rapidement s'oxyder au contact de l'air pour former une couche superficielle de silice. La couche d'oxydation est communément appelée couche de passivation, d'où les termes « silicium passivé ».

Le dispositif de formation 1 comprend un réacteur 2, placé sous atmosphère inerte tel que de l'argon, et formant une zone réactionnelle au sein de laquelle peut être réalisée la réduction de la silice et/ou du silicium passivé en silicium.

Une arrivée de silice et/ou de silicium passivé 3 permet l'acheminement de silice et/ ou de silicium passivé vers le réacteur 2.

Une arrivée de silane 4 permet également l'acheminement de silane vers le réacteur 2.

L'arrivée de silice et/ou de silicium passivé 3 et l'arrivée de silane 4 peuvent être formées, respectivement, par une première conduite et une deuxième conduite.

Dans l'exemple illustré, les première et deuxième conduites débouchent dans une troisième conduite 5 en connexion fluidique avec le réacteur 2.

Avantageusement, la troisième conduite 5 comporte une extrémité 5a débouchant sur le réacteur 2.

L'extrémité 5a de la troisième conduite 5 forme une arrivée de mélange de silane et de silice et/ou silicium passivé permettant l'entrée du mélange de silane et de silice et/ ou silicium passivé dans le réacteur 2.

Un laser à dioxyde de carbone 6 est positionné de façon à appliquer un faisceau 6a au mélange formé par le silane et la silice et/ou le silicium passivé acheminé dans le réacteur 2.

De préférence, l'arrivée de silane 4 est positionnée en aval de l'arrivée de silice et/ou de silicium passivé 3, ce qui permet d'éviter un retour de flamme, compte tenu de la réaction entre le silane et le laser à dioxyde de carbone 6.

La présence de la troisième conduite 5 dans laquelle débouchent l'arrivée de silane 4 et l'arrivée de silice et/ou de silicium passivé, en aval du réacteur 2, permet de pouvoir séparer l'arrivée de silane 4 et l'arrivée de silice et/ou de silicium passivé et de positionner l'arrivée de silane 4 en aval de l'arrivée de silice et/ou de silicium passivé 3.

Le dispositif de formation 1 comprend également une sortie de silicium obtenu 7.

De préférence, l'extrémité 5a de la troisième conduite 5 et la sortie de silicium obtenu 7 sont positionnées sur un axe commun.

La zone réactionnelle est très localisée ce qui favorise une homogénéité de la poudre de silicium obtenue grâce à une réaction de réduction qui a lieu au sein de la flamme, sur une faible quantité de poudre d'aérosol à chaque instant.

Avantageusement, le laser à dioxyde de carbone 6 peut être positionné de façon à ce que le faisceau 6a s'étende selon un axe perpendiculaire à l'axe commun le long duquel sont positionnés l'extrémité 5a de la troisième conduite 5 et la sortie de silicium obtenu 7.

De préférence, le dispositif de formation 1 comprend, en outre, un générateur d'aérosol 8 positionné en amont de l'arrivée de silice et/ou de silicium passivé 3. Le générateur d'aérosol 8 est apte à former un aérosol à partir d'une poudre de silice et/ou silicium passivé.

De préférence, le dispositif de formation 1 comprend un filtre 9 apte à collecter le silicium obtenu.

Avantageusement, une pompe 10 peut être disposée en aval du réacteur 2 de façon à forcer l'évacuation de la phase gazeuse produite, comportant du silicium et de la vapeur d'eau, vers la sortie de silicium obtenu 7 et notamment faciliter la récupération du silicium obtenu sur le filtre 9.

L'invention se rapporte également à un procédé de formation de silicium par réduction de silice et/ou de silicium passivé.

Le procédé de formation comprend l'acheminement de silane vers le réacteur 2 placé sous atmosphère inerte, tel que sous argon.

Le procédé de formation comprend également l'acheminement de silice et/ou de silicium passivé vers le réacteur 2.

Un mélange formé par le silane et la silice et/ou le silicium passivé est obtenu. Ce mélange est acheminé vers le réacteur 2.

Dans l'exemple illustré, l'acheminement de silice et/ou de silicium passivé est réalisé au moyen de la première conduite formant l'arrivée de silice et/ou de silicium passivé 3.

De plus, l'acheminement de silane est réalisé au moyen de la deuxième conduite formant l'arrivée de silane 4.

Aussi, les première et deuxième conduites débouchent dans la troisième conduite 5 en connexion fluidique avec le réacteur 2 qui permet l'acheminement du mélange formé par le silane et la silice et/ou le silicium passivé vers le réacteur 2.

Selon un mode de réalisation, seule de la silice peut être acheminée vers le réacteur 2.

Selon une alternative, seul du silicium passivé peut être acheminé vers le réacteur 2.

Selon une autre alternative, un mélange de silice et de silicium passivé peut être acheminé vers le réacteur 2.

Un faisceau 6a de laser à dioxyde de carbone 6 est ensuite appliqué au mélange de silane et la silice et/ou le silicium passivé jusqu'à la formation de silicium et d'eau dans le réacteur 2.

Le silicium obtenu est récupéré.

L'atmosphère inerte du réacteur 2 permet d'éviter la présence d'oxygène additionnel qui favoriserait l'oxydation du silane plutôt que la réduction de la silice.

Le silane, par absorption du faisceau 6a du laser à dioxyde de carbone 6, se décompose en silicium et en dihydrogène, produisant une flamme de haute température, allant jusqu'à plus de 1000°C selon la puissance du laser 6 utilisé et du débit de silane acheminé.

A l'intersection entre le laser à dioxyde de carbone 6 et le silane, la silice et/ou le silicium passivé se retrouve donc en atmosphère fortement réductrice, compte tenu de la présence de dihydrogène, et à température élevée, engendrant la réduction des molécules de silice de la silice et/ou du silicium passivé. La réduction résulte en la formation de silicium et d'eau.

La réduction de la silice et/ou du silicium passivé a lieu selon la réaction suivante :

SiH₄ → Si + 2H₂

SiO₂ + H₂ → SiO + H₂O

SiO + H₂ → Si + H₂O

Soit la réaction totale suivante :

SiO2 + SiH4 = 2Si + 2H2O

Le silane est acheminé vers le réacteur 2 en phase gazeuse.

La silice et/ou le silicium passivé sont acheminés vers le réacteur 2 sous forme d'aérosol.

Un aérosol solide comportant de la poudre de silice et/ou de silicium passivé en suspension dans un milieu gazeux, tel que de l'argon, est généré par le générateur d'aérosol 8 avant d'être acheminé vers le réacteur 2.

La zone réactionnelle est très localisée ce qui favorise une homogénéité de la poudre de silicium obtenue grâce à une réaction de réduction qui a lieu au sein de la flamme générée lors de l'application du faisceau de laser à dioxyde de carbone sur le mélange de silane et de silice et/ou silicium passivé, sur une faible quantité de poudre d'aérosol à chaque instant.

La taille des particules de silice et/ou de silicium passivé est, de préférence, comprise entre 100 nm et 100 µm.

Le procédé de formation peut, avantageusement, comprendre une étape de broyage de la silice et/ou du silicium passivé, avant d'être acheminés vers le réacteur 2 afin de réduire et homogénéiser la taille des particules.

De préférence, l'acheminement du silane et/ou de la silice et/ou du silicium passivé vers le réacteur 2 est effectuée à l'aide d'un gaz inerte formant un fluide de transport, de préférence de l'argon.

De préférence, la puissance du laser est réglée entre 500 W et 2500 W.

Le procédé de formation peut comprendre la variation du diamètre de l'arrivée de silice et/ou de silicium passivé 3.

De préférence, le diamètre de l'arrivée de mélange de silane et de silice et/ou silicium passivé, formée dans l'exemple illustré par l'extrémité 5a de la troisième conduite 5, peut être compris entre 5 mm et 12 mm.

La variation du diamètre de l'arrivée de mélange de silane et de silice et/ou de silicium passivé peut être effectuée en fonction d'au moins un paramètre choisi parmi :
le taux de production de silicium souhaité, la taille des particules de silice et/ou de silicium passivé, ou la pureté du silicium souhaitée.

Avantageusement, le procédé de formation peut comprendre la variation du diamètre de l'arrivée de silice et/ou de silicium passivé 3, notamment en fonction d'au moins un paramètre choisi parmi : le taux de production de silicium souhaité, la taille des particules de silice et/ou de silicium passivé, ou la pureté du silicium souhaitée.

Le procédé de formation peut également comprendre la variation du débit de silice et/ou de silicium passivé acheminé vers le réacteur 2.

La variation du débit de silice et/ou de silicium passivé peut être effectuée en fonction d'au moins un paramètre choisi parmi : le temps de résidence de la silice et/ou du silicium passivé dans le réacteur 2 ou le taux de production de silicium souhaité.

Le procédé de formation peut comprendre la variation du débit de silane acheminé vers le réacteur 2.

La variation du débit de silane peut être effectuée en fonction d'au moins un paramètre choisi parmi : le temps de résidence du silane dans le réacteur 2 ou la température dans le réacteur 2.

La température de flamme et le temps de résidence sont dépendants des débits de silane et de silice et/ou de silicium passivé acheminés dans le réacteur 2. Une concentration plus forte en silane arrivant dans le réacteur 2 permet une plus grande absorption de l'énergie du laser à dioxyde de carbone 6 et une température de réaction plus élevée, mais avec un temps de résidence plus court.

Le procédé de formation peut également comprendre la modulation de la pureté du silicium obtenu, de préférence à partir d'au moins un des paramètres suivants : la température de la flamme de réaction générée lors de l'application du faisceau 6a de laser à dioxyde de carbone 6 sur le mélange de silane et de silice et/ou silicium passivé, le temps de résidence de la silice et/ou du silicium passivé dans le réacteur 2, ou le ratio silice et/ou silicium passivé/silane dans le réacteur 2.

Le procédé de formation peut également comprendre la modulation de la taille des particules de silicium, de préférence à partir d'au moins un des paramètres suivants : le temps de résidence de la silice et/ou du silicium passivé dans la flamme générée lors de l'application du faisceau 6a de laser à dioxyde de carbone 6 sur le mélange de silane et de silice et/ou silicium passivé, ou la température de la flamme générée lors de l'application du faisceau 6a de laser à dioxyde de carbone 6 sur le mélange de silane et de silice et/ou silicium passivé.

Le procédé de formation est donc flexible. La maîtrise des débits entrants de gaz inerte de transport et d'aérosol de silice et/ou de silicium passivé ainsi que le contrôle de la puissance du faisceau 6a du laser à dioxyde de carbone 6 permettent de jouer sur les débits de production et la taille des particules obtenues.

Le procédé de formation permet de former du silicium en continu. Pour cela, le silane et la silice et/ou le silicium passivé peuvent être injectés dans le réacteur 2 en continu.

Le procédé de formation permet de faciliter son industrialisation et ainsi la formation de silicium à grande échelle.

Dans l'exemple illustré, le silicium obtenu est collecté par le filtre 9 à l'aide de la pompe 10 disposé en aval du réacteur 2.

Le procédé de formation peut être utilisé pour former du silicium à partir de silice et/ ou de silicium passivé n'ayant jamais été utilisés.

En variante, le procédé de formation peut être utilisé pour former du silicium à partir de déchets de silice et/ou de silicium passivé.

Par déchets de silice et/ou de silicium passivé, on entend dans la présente invention un matériau en silice et/ou un matériau en silicium passivé ayant déjà servi lors d'au moins une première utilisation.

Ceci permet de recycler les déchets de silice et/ou de silicium passivé issus de divers secteurs.

L'invention concerne également l'utilisation de silicium obtenu par un procédé de formation comme précédemment décrit dans une batterie tel qu'une batterie lithium-ion.

## Revendications

1. Procédé de formation de silicium par réduction de silice et/ou de silicium passivé, le procédé comprenant les étapes suivantes :
- acheminer du silane vers un réacteur (2) placé sous atmosphère inerte ;
- acheminer de la silice et/ou du silicium passivé vers le réacteur (2) pour obtenir un mélange formé par le silane et la silice et/ou le silicium passivé ;
- appliquer un faisceau (6a) de laser à dioxyde de carbone (6) audit mélange pour la formation de silicium et d'eau dans le réacteur (2) ; et
- récupérer le silicium obtenu.

2. Procédé de formation selon la revendication 1, dans lequel la silice et/ou le silicium passivé sont acheminés vers le réacteur (2) sous forme d'aérosol.

3. Procédé de formation selon la revendication 2, comprenant la variation du débit de silice et/ou silicium passivé acheminé vers le réacteur (2), notamment en fonction d'au moins un paramètre choisi parmi : le temps de résidence de la silice et/ou du silicium passivé dans le réacteur (2) ou le taux de production de silicium souhaité.

4. Procédé de formation selon l'une quelconque des revendications précédentes, dans lequel le mélange de silane et de silice et/ou le silicium passivé est acheminé vers le réacteur (2) à l'aide d'une arrivée de mélange de silane et de silice et/ou de silicium passivé, le procédé comprenant la variation du diamètre de l'arrivée de mélange de silane et de silice et/ou de silicium passivé, notamment en fonction d'au moins un paramètre choisi parmi : le taux de production de silicium souhaité, la taille des particules de silice et/ou de silicium passivé, ou la pureté du silicium souhaitée.

5. Procédé de formation selon l'une quelconque des revendications précédentes, dans lequel la pureté du silicium obtenu est modulée, de préférence à partir d'au moins un des paramètres suivants : la température de la flamme de réaction générée lors de l'application du faisceau (6a) de laser à dioxyde de carbone (6) sur ledit mélange, le temps de résidence de la silice et/ou du silicium passivé dans le réacteur (2), ou le ratio silice/silane dans le réacteur (2).

6. Procédé de formation selon l'une quelconque des revendications précédentes, la taille des particules de silicium obtenu est modulée, de préférence à partir d'au moins un des paramètres suivants : le temps de résidence dans la flamme générée lors de l'application du faisceau (6a) de laser à dioxyde de carbone (6) sur ledit mélange, ou la température de ladite flamme.

7. Procédé de formation selon l'une quelconque des revendications précédentes, dans lequel la silice et/ou le silicium passivé sont issus de déchets de silice et/ou de silicium passivé.

8. Utilisation de silicium susceptible d'être obtenu par un procédé de formation selon l'une quelconque des revendications 1 à 7 dans une batterie telle qu'une batterie lithium-ion.

9. Dispositif de formation de silicium par réduction de silice et/ou de silicium passivé, comprenant :
- un réacteur (2) sous atmosphère inerte ;
- une arrivée de silane (4) et une arrivée de silice et/ou de silicium passivé (3) configurées pour acheminer le silane et la silice et/ou le silicium passivé vers le réacteur (2) ;
- un laser à dioxyde de carbone (6) configuré pour appliquer un faisceau (6a) à un mélange formé par le silane et la silice et/ou le silicium passivé dans le réacteur (2) ; et
- une sortie du silicium obtenu.

10. Dispositif selon la revendication 9, comprenant un générateur d'aérosol (8) en amont de l'arrivée de silice et/ou de silicium passivé (3).
